# EUROPÄISCHE PATENTANMELDUNG

(11) **EP 2 065 699 A2**
(43) Veröffentlichungstag der Anmeldung: **03.06.2009**
(21) Anmeldenummer: 08020134.6
(22) Anmeldetag: 19.11.2008
(51) Int. Cl.: G01N 25/66

(54) **Taupunktsensoranordnung**

(30) Priorität: 28.11.2007 DE 102007047888
(71) Anmelder: Sitronic Ges. für elektrotechnische Ausrüstung mbH & Co. KG, 71116 Gärtringen (DE)
(72) Erfinder: Doll, Wolfgang, 70771 Leinfelden-Echterdingen (DE)
(74) Vertreter: Kohler Schmid Möbus

(57) **Zusammenfassung**

Eine Sensoranordnung (1) umfasst einen Taupunktsensor (3) zur Messung des Taupunktverlaufs in einem Raum und einen Temperatursensor (4) zur Messung des Temperaturverlaufes an einer Wandfläche des Raumes, wobei Mittel zur Auswertung und/oder Speicherung des gemessenen Taupunktverlaufs und des gemessenen Wandflächentemperaturverlaufs vorgesehen sind.

## Beschreibung

Die vorliegende Erfindung betrifft eine Sensoranordnung für einen Raum bzw. eine Wandfläche des Raumes. Raum kann im Sinne der Erfindung weit ausgelegt werden. Unter einem Raum muss nicht zwingend ein abgeschlossener Raum verstanden werden. Der Raum kann eine Wohnung, ein Kraftfahrzeug, ein Hohlraum, ein Kamin oder dergleichen sein.

Sensoranordnungen werden zum Beispiel in Museen eingesetzt, um für die Exponate der Museen negative Raumklimaeinflüsse frühzeitig erkennen zu können. Dazu werden üblicherweise der Luftfeuchtigkeitsverlauf und der vom Temperatursensor gemessene Lufttemperaturverlauf auf einem Speichermedium, z.B. einer Papierrolle, gespeichert bzw. dokumentiert. Derartige Sensoranordnungen eignen sich nur bedingt zur Bestimmung einer Schimmelbildungsneigung in Räumen, da sich Schimmel an Wandflächen der Räume, d.h. an der Decke, einer Wand oder am Boden eines Raumes, ausbildet und die genannten Sensoranordnungen lediglich die Luftfeuchtigkeit und die Lufttemperatur im Innenraum des Raumes aufzeichnen.

In Kraftfahrzeugen (KFZ) werden Sensoranordnungen im KFZ-Fahrgastraum zur Überwachung einer Feuchtigkeitsbeschlagsneigung, insbesondere der Windschutzscheibe des KFZ, eingesetzt. Derartige Sensoranordnungen umfassen einen Taupunktsensor mit einem Luftfeuchtesensorelement und einem Temperatursensor, wobei das Luftfeuchtesensorelement und der Temperatursensor eine thermische Kopplung aufweisen. Der Temperatursensor wird als Oberflächentemperatursensor z.B. der Windschutzscheibe eingesetzt. In der EP1380481 A2 und der EP1306242 A1 wird vorgeschlagen, ein Luftfeuchtesensorelement direkt auf oder in der unmittelbaren Umgebung der Windschutzscheibe anzubringen. Dieses Sensorelement misst die relative Luftfeuchte. Aus den daraus gewonnenen Daten werden Rückschlüsse auf die Beschlagsneigung der Scheibe gezogen. Weiter schlägt die EP1306242 A1 vor, zur Beschlagsvermeidung zusätzlich die Temperatur im Fahrgastraum eines KFZ zu berücksichtigen.

Aus der WO 02/33395 A1 ist ein Taupunktsensor bekannt. Wird einem gasförmigen Medium, z.B. Wasserdampf, Wärme entzogen, wie dies z.B. an der Innenoberfläche einer KFZ-Fensterscheibe geschehen kann, so verdichtet es sich bei entsprechender Temperatur zu einer Flüssigkeit, z.B. Wasser. Letzteres wird als Unterschreitung des Taupunktes bezeichnet. Die Temperatur bei der die Flüssigkeit kondensiert (Taupunkttemperatur) und die zugehörige relative Luftfeuchtigkeit werden als Taupunkt bezeichnet. Liegt die Temperatur an einer Oberfläche bei einer bestimmten relativen Luftfeuchtigkeit nahe an der Taupunkttemperatur oder unterschreitet diese Oberflächentemperatur die Taupunkttemperatur, so neigt die Oberfläche dazu, zu beschlagen (Feuchtigkeitsbeschlagsneigung), d.h. es kondensiert die Flüssigkeit an der Oberfläche aus.

Der Taupunktsensor umfasst eine Montagebasis, auf der ein Luftfeuchtesensor und ein Lufttemperatursensor angeordnet sind. Auf der Montagebasis ist eine thermisch leitfähige Beschichtung aufgebracht, die den Luftfeuchtesensor und den Lufttemperatursensor thermisch kontaktieren. Da der Luftfeuchtesensor und der Lufttemperatursensor durch die thermische Kontaktierung bei gleicher Temperatur Daten erfassen, ist es möglich, aus den erfassten Daten der Sensoren am Ort der Montagebasis des Taupunktsensors zu ermitteln, ob der Taupunkt erreicht wird, d.h. ob bei der gemessenen Temperatur die gemessene Luftfeuchtigkeit oberhalb der Luftfeuchtigkeit des Taupunkts liegt oder ob bei der gemessenen Luftfeuchtigkeit die gemessene Temperatur unterhalb der Taupunkttemperatur liegt. Die bekannten Sensoranordnungen mit Taupunktsensoren führen keine Aufzeichnung der gemessenen Luftfeuchtigkeiten und Oberflächentemperaturen durch.

Der Erfindung liegt die Aufgabe zugrunde, eine Sensoranordnung für einen Raum bereit zu stellen, die die Nachteile des Stands der Technik vermeidet, wobei insbesondere eine zuverlässige Bestimmung einer Schimmelbildungsneigung im Bereich einer Wandfläche oder an einer Wandfläche des Raumes ermöglicht werden soll.

Diese Aufgabe wird eine Sensoranordnung gemäß Patentanspruch 1 gelöst. Die abhängigen Ansprüche stellen bevorzugte Ausführungsformen der Erfindung dar.

Eine erfindungsgemäße Sensoranordnung ist zur Bestimmung einer Schimmelbildungsneigung in mindestens einem Raum beispielsweise in einem Gebäude geeignet.

Taupunktsensor und einer oder mehrere Temperatursensoren können zu einem Messgerät zusammengefasst sein oder lediglich eine Anordnung aus einem Taupunktsensor und einem oder mehreren Temperatursensoren bilden, wobei die Sensoren voneinander entkoppelt sind.

Die erfindungsgemäße Sensoranordnung ermöglicht die Aufzeichnung des Taupunktverlaufs und eines Wandtemperaturverlaufes. Dies ermöglicht eine zuverlässige Bestimmung einer Schimmelbildungsneigung an der Wand, in deren Bereich der Wandtemperaturverlauf gemessen wird. Dazu wird eine Taupunktsensoranordnung eingesetzt, die analog zu den bekannten Taupunktsensoranordnungen, die in Kraftfahrzeugen zur Messung der Beschlagsneigung der Windschutzscheibe eingesetzt werden, aufgebaut ist. Da die Schimmelbildungsneigung einer Wand von der Feuchte der Wand und damit von der Neigung des in der Raumluft als Wasserdampf vorhandenen Wassers, sich an der Wand zu verflüssigen, d.h. sich an der Wand niederzuschlagen, abhängt, werden mittels der erfindungsgemäßen Sensoranordnung die für das Niederschlagen relevanten Raumklimadaten gemessen und gespeichert bzw. dokumentiert. Diese Raumklimadaten sind die Werte der den Taupunkt an der Wand bestimmenden Größen, nämlich die Luftfeuchtigkeit und die Temperatur ur der Wand. Wenn die Temperaturen des gemessenen Wandtemperaturverlaufes dauerhaft oder zumindest häufig unter die Taupunkttemperatur der zugehörigen Luftfeuchtigkeit, d.h. der zum Zeitpunkt der Temperaturmessung gemessenen Luftfeuchtigkeit, fällt, besteht eine hohe Wahrscheinlichkeit für eine Schimmelbildung an der Wand, an der der Wandtemperaturverlauf gemessen wurde, weil sich dann dort Feuchtigkeit niederschlagen kann. Unter Fallen unter die Taupunkttemperatur wird dabei auch bereits ein Fallen unter einen Temperaturbereich des Taupunktes verstanden. Dieser Temperaturbereich kann bereits einige Grad Celsius über der eigentlichen Taupunkttemperatur liegen, da auch dann bereits ein Abtrocknen von Feuchtigkeit aus der Wand nur sehr langsam vonstatten geht.

Mittels der erfindungsgemäßen Sensoranordnung können diese Raumklimadaten über einen längeren Zeitraum z.B. von mehreren Wochen oder Monaten aufgezeichnet werden. Dadurch kann das Raumklima, insbesondere auch das Lüftungsverhalten, überwacht werden. So lassen sich z.B. Streitigkeiten zwischen Vermietern und Mietern bezüglich der Ursachen von Schimmelbildung klären.

Wenn die mit den erfindungsgemäßen Verfahren ermittelten Daten als Grundlage für die Steuerung einer Heizung oder einer Klimaanlage verwendet werden, kann das Raumklima zur Vermeidung von Schimmelbildung kontrolliert geregelt werden. Beispielsweise kann in einem KFZ eine Heckscheibenheizung gesteuert werden. Mithilfe der Erfindung kann ein effektives Heizen erreicht werden. Es können beispielsweise Heizelemente, wie Heizfolien, Heizdrähte oder auch Dämmmaterialien, an den zu überwachenden Wandflächen angeordnet sein. Dies kann insbesondere Heizelemente hinter Schränken oder Bauelementen betreffen.

Die erfindungsgemäße Sensoranordnung kann als mobiles Gerät ausgebildet sein oder in einem Gebäude oder KFZ fest installiert sein.

Bevorzugt ist eine Auswerteeinheit vorgesehen, eingerichtet, einen Schimmelbildungsneigungsindikator in dem Speichermodul zu speichern, wenn der Wandtemperaturverlauf eine Taupunkttemperatur eines Taupunkts der Luft im Innenraumvolumen des Raumes oder eine vorbestimmten Temperaturgrenze unterschreitet. Die Temperaturgrenze kann dabei aus den oben genannten Gründen einige Grad Celsius oberhalb der Taupunkttemperatur liegen. Dadurch kann eine Auswertung der gemessenen Daten automatisiert werden. Es wird direkt gespeichert, ob am Montageort, d.h. der Wand, an der die erfindungsgemäße Sensoranordnung positioniert ist, eine erhöhte Wahrscheinlichkeit einer Schimmelbildung besteht.

Wenn die Auswerteeinheit eingerichtet ist, um ein Alarmsignal bei einem Unterschreiten der Taupunkttemperatur an einem Montageort des Temperatursensors auszugeben, kann die Schimmelbildung durch geeignete Gegenmaßnahmen, z.B. Lüften oder Heizen, aktiv bekämpft werden.

Besonders bevorzugt ist die Taupunktsensoranordnung in einem Gehäuse angeordnet, wobei an dem Gehäuse eine Datenübergabeschnittstelle, bevorzugt eine Drahtloskommunikationsschnittstelle, insbesondere eine Bluetooth-Schnittstelle, und/oder eine Steckerschnittstelle, insbesondere eine USB-Schnittstelle, vorgesehen ist. Die erfindungsgemäße Sensoranordnung kann so auf einfache Weise zusammen mit einem handelsüblichen Computer zur Darstellung der gemessenen Daten und/oder zu deren Auswertung verwendet werden. Dazu ist lediglich eine Treiber- und Auswertungssoftware auf den Computer zu installieren. Es müssen zum Einsatz der Sensoranordnung keine Kabel verlegt werden.

Wenn das Gehäuse zumindest teilweise von einer feuchtigkeitsdurchlässigen Membran gebildet ist oder Luftdurchlasslöcher aufweist, ist eine zuverlässige Messung des Luftfeuchtigkeitsverlaufes im Innenraumvolumen des Raumes möglich, da die Raumluft gut um das Luftfeuchtesensorelement zirkulieren kann.

Vorteilhaft sind Haftmittel oder Mittel zur lösbaren Befestigung des Temperatursensors an der Wand vorgesehen, wodurch eine besonders einfache Handhabung der erfindungsgemäßen Sensoranordnung ermöglicht wird.

Bevorzugt ist eine thermische Entkopplung des Temperatursensors vom Luftfeuchtesensorelement vorgesehen. Die Temperaturen der Wandungen eines Raumes entsprechen häufig nicht der Temparatur des Innenvolumens, da die Wandungen sich bei Änderung der Innenraumtemperatur nur langsam aufwärmen bzw. abkühlen. Dadurch kann eine Messung des Luftfeuchtigkeitsverlaufes im Innenraumvolumen des Raumes verfälscht werden, wenn das Luftfeuchtesensorelement auf der Wandtemperatur gehalten ist. Letzteres trifft insbesondere dann zu, wenn mittels des Luftfeuchtesensorelements direkt die relative Luftfeuchtigkeit gemessen wird. Die thermische Entkopplung ermöglicht daher eine zuverlässigere Ermittlung einer Unterschreitung des Taupunktes bei der gemessenen Luftfeuchte.

Bevorzugt ist ein Innenraumtemperatursensor vorgesehen, eingerichtet zur Messung eines Innenraumtemperaturverlaufs im Innenraumvolumen des Raumes. Dieser Innenraumtemperatursensor misst die Temperatur die auch das Luftfeuchtesensorelement der Taupunktsensoranordnung aufweist. Es kann so zuverlässig die für das Feststellen des Unterschreitens des Taupunkts notwendige Ermittlung der relativen Luftfeuchtigkeit vorgenommen werden, ohne dass ein Fehler durch ein Heranziehen der Wandtemperatur für die Ermittlung der relativen Luftfeuchtigkeit auftreten kann. Weiter kann aus den Änderungen des Innenraumtemperaturverlaufs auf das Lüftungsverhalten in dem Raum zurück geschlossen werden.

Eine erfindungsgemäße Gebäudemanagementzentrale weist mindestens eine erfindungsgemäße Sensoranordnung auf. Dabei sind Datenübernahmemittel zur Übernahme der gemessenen Wandtemperaturverläufe und der gemessenen Luftfeuchtigkeitsverläufe der Sensoranordnung vorgesehen. Die Datenübernahmemittel sind bevorzugt als Drahtloskommunikationsschnittstelle, insbesondere als Bluetooth-Schnittstelle, und/oder als eine Steckerschnittstelle, insbesondere eine USB-Schnittstelle, ausgebildet. Mittels Ausgabemitteln kann ein Schimmelbildungsneigungsindikator angezeigt werden. Die Messpunkte für die Messung von Wandtemperaturverläufen sind in Gebäudebereichen vorzusehen, wo eine Schimmelbildungsneigung erwartet wird.

Die erfindungsgemäße Sensoranordnung eignet sich zur Bestimmung einer Schimmelbildungsneigung in einem Raum eines Gebäudes, d.h. an einer Innenwandung des Raumes.

Die Erfindung kann auch dazu verwendet werden, den Außenbeschlag von Scheiben oder Glasfassaden zu verhindern.

Weitere Vorteile ergeben sich aus der Beschreibung und der beigefügten Zeichnungen. Die vorstehend genannten und die noch weiter aufgeführten Merkmale der Erfindung können jeweils einzeln oder in Kombination miteinander verwendet werden. Die erwähnten Ausführungsformen sind nicht als abschließende Aufzählung zu verstehen, sondern haben vielmehr beispielhaften Charakter.

Die Erfindung wird nachfolgend anhand von Ausführungsbeispielen unter Bezugnahme auf die Zeichnungen näher erläutert. Es zeigt:
- Figur 1: eine Sensoranordnung, die als USB Steckvorrichtung (USB-Stick) ausgebildet ist;
- Figur 2: eine Gebäudemanagementzentrale in Verbindung mit der Sensoranordnung gemäß Figur 1;
- Figur 3: eine Gebäudemanagementzentrale in Verbindung mit einer weiteren Sensoranordnung.

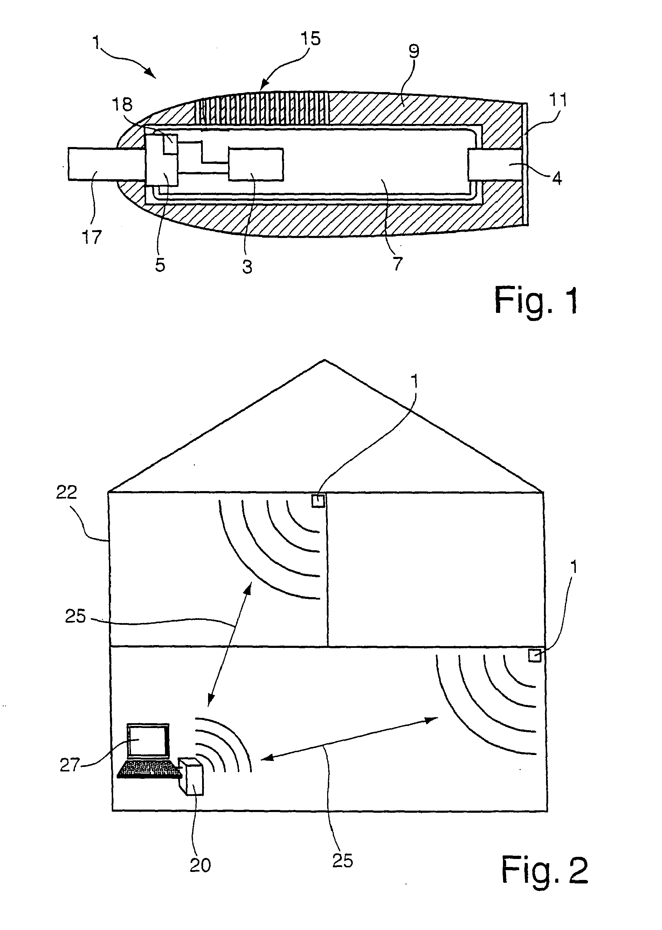

In Figur 1 ist eine erfindungsgemäße Sensoranordnung 1, die als USB Steckvorrichtung ausgebildet ist, dargestellt. Ein Taupunktsensor 3 zur Messung des Taupunktverlaufs und ein Temperatursensor 4 zur Messung eines Wandtemperaturverlaufes sind zusammen mit einem Speichermodul 5 zur Speicherung des gemessenen Taupunktverlaufes und des gemessenen Wandtemperaturverlaufes auf einer Montagebasis 7, z.B. einer Platine, befestigt.

Die Platine mit dem Taupunktsensor 3 ist innerhalb eines Gehäuses 9 angeordnet. Dabei ist der Temperatursensor 4 in einer Gehäusewand positioniert, so dass der Temperatursensor 4 mit z.B. einer Wand eines Raumes in Kontakt gebracht werden kann, so dass mittels des Temperatursensors 4 der Wandtemperaturverlauf gut gemessen werden kann. Im Bereich des für die Wandtemperaturmessung vorgesehenen Temperatursensors 4 sind an der Außenseite des Gehäuses Haftmittel 11 zur Befestigung der Sensoranordnung 1 an der Wandung, an der beispielsweise eine Schimmelbildungsneigung bestimmt werden soll, vorgesehen. Diese Haftmittel können z.B. als eine Klebebeschichtung ausgebildet sein. Weiterhin sind Mittel zur lösbaren Verfügung denkbar.

Zur Energieversorgung ist weiter eine Energiequelle, z.B. eine Batterie, im Gehäuse vorzusehen.

Der Taupunktsensor 3 umfasst einen Innenraumtemperatursensor und ein Innenraumluftfeuchtesensorelement. Dieser Innenraumtemperatursensor ist im thermischen Kontakt mit dem Luftfeuchtesensorelement. Das Luftfeuchtesensorelement ist vom im Bereich einer Wandfläche zu positionierenden Temperatursensor 4 beabstandet und misst daher eine Innenraumluftfeuchtigkeit. Mittels des Innenraumtemperatursensors 13 kann daher ein zugehöriger Innenraumtemperaturverlauf im Innenraumvolumen eines Raumes gemessen werden. Um eine möglichst exakte Messung der Innenraumluftfeuchtigkeit und/oder des Innenraumtemperaturverlaufs zu ermöglichen, sind im Bereich des Luftfeuchtesensorelements und/oder des Innenraumtemperatursensors Luftdurchlasslöcher 15 am Gehäuse 9 vorgesehen. Daher kann der Taupunktverlauf mithilfe des Taupunktsensors 3 aufgezeichnet werden. Der Temperaturverlauf an der Gebäudewand kann mithilfe des Temperatursensors 4 aufgezeichnet werden. Taupunktsensor 3 und Temperatursensor 4 sind zusammen in eine Anordnung integriert, welche die Basis für ein kompaktes Messgerät bildet.

Die Sensoranordnung 1 weist an ihrem Gehäuse 9 eine Datenübergabeschnittstelle 17 auf, die als eine USB-Steckerschnittstelle, d.h. als der männliche Stecker einer USB-Steckerschnittstelle, ausgebildet ist. Mittels der Datenübergabeschnittstelle 17 können der von der Taupunktsensoranordnung gemessene und im Speichermodul gespeicherte Taupunktverlauf und der Wandflächentemperaturverlauf aus dem Speichermodul 5 ausgelesen und an eine Auswerteeinheit z.B. einen Computer übergeben werden. Mittels der Auswerteeinheit kann aus den gemessenen Verläufen eine Schimmelbildungsneigung an der Wandfläche, an der die Sensoranordnung 1 befestigt war, ermittelt werden. Diese Neigung ist dann gegeben, wenn der gemessene Temperaturverlauf an der Wandfläche unter den Taupunktverlauf sinkt.

Es ist eine Auswerteeinheit 18 vorgesehen. Diese ist eingerichtet, einen Schimmelbildungsneigungsindikator in dem Speichermodul 5 zu speichern, wenn der Wandtemperaturverlauf eine Taupunkttemperatur eines Taupunkts der Luft im Innenraumvolumen des Raumes oder eine vorbestimmten Temperaturgrenze unterschreitet.

In Figur 2 ist eine erfindungsgemäße Gebäudemanagementzentrale dargestellt. Die Gebäudemanagementzentrale weist einen Computer 20 und mehrere erfindungsgemäße Sensoranordnungen 1 auf. Die Sensoranordnungen 1 sind jeweils in einer Ecke jeweils eines Raumes eines Gebäudes 22 an einer Wand des entsprechenden Raumes befestigt. Der Computer 20 kommuniziert drahtlos mit den Sensoranordnungen 1. Die Sensoranordnungen 1 können z.B. wie in Figur 1 dargestellt aufgebaut sein, wobei zusätzlich eine Drahtloskommunikationsschnittstelle, z.B. eine Bluetooth-Schnittstelle, im Gehäuse vorgesehen ist. Die in der Figur durch Doppelpfeile symbolisierte drahtlose Kommunikation 25 dient zur Übermittlung der von den Sensoranordnungen 1 gemessenen Temperaturverläufe und Innenraumluftfeuchtigkeit an den Computer 20, der als Auswerteeinheit dient. Als Ausgabemittel 27 zur Ausgabe eines Schimmelbildungsneigungsindikators dient der Bildschirm des Computers 20.

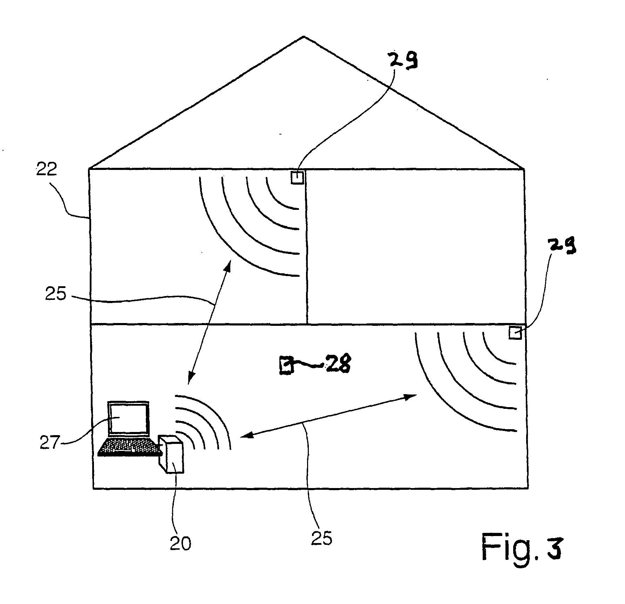

In Figur 3 ist eine weitere erfindungsgemäße Gebäudemanagementzentrale dargestellt. Die Gebäudemanagementzentrale weist einen Computer 20, einen Taupunktsensor 28 und mehrere Temperatursensoren 29 auf. Die Temperatursensoren 29 sind jeweils in einer Ecke jeweils eines Raumes eines Gebäudes 22 an einer Wand des entsprechenden Raumes befestigt. Der Computer 20 kommuniziert drahtlos mit den Sensoren 1. Die in der Figur durch Doppelpfeile symbolisierte drahtlose Kommunikation 25 dient zur Übermittlung der von den Sensoren gemessenen Verläufe an den Computer 20, der als Auswerteeinheit dient. Als Ausgabemittel 27 zur Ausgabe eines Schimmelbildungsneigungsindikators dient der Bildschirm des Computers 20.

## Patentansprüche

1. Sensoranordnung (1) mit einem Taupunktsensor (3; 28) zur Messung des Taupunktverlaufs in einem Raum und mit einem Temperatursensor (4; 29) zur Messung des Temperaturverlaufes an einer Wandfläche des Raumes, wobei Mittel zur Auswertung und/oder Speicherung des gemessenen Taupunktverlaufs und des gemessenen Wandflächentemperaturverlaufs vorgesehen sind.

2. Sensoranordnung nach Anspruch 1, **dadurch gekennzeichnet, dass** eine Auswerteeinheit (18) vorgesehen ist, eingerichtet, einen Schimmelbildungsneigungsindikator in dem Speichermodul (5) zu speichern, wenn der Wandtemperaturverlauf eine Taupunkttemperatur eines Taupunkts der Luft im Innenraumvolumen des Raumes oder eine vorbestimmten Temperaturgrenze unterschreitet.

3. Sensoranordnung nach Anspruch 2, **dadurch gekennzeichnet, dass** die Auswerteeinheit (18) eingerichtet ist, um eine Heizung bei einem Unterschreiten der Taupunkttemperatur zu steuern.

4. Sensoranordnung nach Anspruch 2, **dadurch gekennzeichnet, dass** die Auswerteeinheit (18) eingerichtet ist, um ein Alarmsignal bei einem Unterschreiten der Taupunkttemperatur an einem Montageort des Temperatursensors auszugeben.

5. Sensoranordnung nach einem der Ansprüche 1 bis 4 , **dadurch gekennzeichnet, dass** die Taupunktsensoranordnung in einem Gehäuse (9) angeordnet ist, wobei an dem Gehäuse (9) eine Datenübergabeschnittstelle (17), bevorzugt eine Drahtloskommunikationsschnittstelle, insbesondere eine Bluetooth-Schnittstelle, und/oder eine Steckerschnittstelle, insbesondere eine USB-Schnittstelle, vorgesehen ist.

6. Sensoranordnung nach Anspruch 5, **dadurch gekennzeichnet, dass** das Gehäuse (9) zumindest teilweise von einer feuchtigkeitsdurchlässigen Membran gebildet ist oder Luftdurchlasslöcher (15) aufweist.

7. Sensoranordnung nach einem der Ansprüche 1 bis 6, **dadurch gekennzeichnet, dass** Haftmittel (11) vorgesehen sind zur Befestigung des Temperatursensors an der Wandfläche.

8. Gebäudemanagementzentrale mit mindestens einer Sensoranordnung (1) nach einem der Ansprüche 1 bis 7, **dadurch gekennzeichnet, dass** Datenübernahmemittel zur Übernahme der gemessenen Wandtemperaturverläufe und der gemessenen Luftfeuchtigkeitsverläufe der Sensoranordnung vorgesehen sind, wobei Ausgabemittel (27) zur Ausgabe eines Schimmelbildungsneigungsindikators vorgesehen sind.

9. Verwendung der Sensoranordnung nach einem der Ansprüche 1 bis 8 zur Bestimmung einer Schimmelbildungsneigung in einem Raum eines Gebäudes.
